# EUROPEAN PATENT SPECIFICATION

(11) **EP 1 440 850 B1**
(45) Date of publication and mention of the grant of the patent: **13.12.2006**
(21) Application number: 04290153.8
(22) Date of filing: 21.01.2004
(51) Int. Cl.: B60R 11/02, G02B 27/01

(54) **Movable personal computer using system in a motor vehicle**
Mobiles Personalrechner benutzendes System in einem Kraftfahrzeug
Système mobile d'utilisation d'ordinateur personnel dans un véhicule

(30) Priority: 21.01.2003 JP 2003012555
(43) Date of publication of application: 28.07.2004
(73) Proprietor: Calsonic Kansei Corporation, Tokyo 164-8602 (JP)
(72) Inventor: Arai, Masatoshi, Nakano-ku Tokyo 164-8602 (JP)
(74) Representative: Intes, Didier Gérard André

(56) References cited:
- WO-A-01/03981
- WO-A-98/28649
- FR-A- 2 721 738
- US-A- 5 878 395
- US-A1- 2003 043 029

## Description

The present invention relates to a movable personal computer using system in a motor vehicle that is capable of using a movable personal computer in the motor vehicle with exchanging information between the computer and an on-board device.

A mobile phone, a Personal Digital Assistance (PDA), a movable personal computer such as a notebook sized personal computer, and the like usually are used indoors and outsides. Some of them are brought into motor vehicles and attached to an instrument panel for their usage.

A conventional mobile phone using system in a motor vehicle of this kind is disclosed in, for example, Japanese patent laying-open publication NO. Tokkai 2002-127834. This system has a cradle that holds and supplies electric power to a hand-held sized communication terminal including a cellar phone, and a stay which is attached to the instrument panel, also called as a dashboard, to support the cradle. This enables hand-free use of the hand-held sized communication terminal in a motor vehicle to communicate with outside.

Another mobile phone using system in a motor vehicle of this kind is disclosed in, for example, Japanese patent laying-open publication NO. Tokkai 2002-236632. This system has a mobile phone that is supplied with electric power from the motor vehicle and communicates with outside, an on-board wireless communication terminal to communicates with outside servers, and an on-board navigation system that receives necessary information selectively from the mobile phone and the wireless communication terminal.

FR 2721738 discloses a movable personal computer using system in a motor vehicle according to the preamble of claim 1.

The above known conventional mobile phone using systems in motor vehicles, however, encounter such a problem that functions available in the system are specialized to be within narrow limits and their displays are too small to see various information during vehicle running.

Compared with the hand-held sized communication terminal such as a mobile phone and a PDA, a movable personal computer, such as a notebook sized personal computer, has various functions including electronic mail, voice recognition, advanced graphics, and so on and a wide screen display to display many characters and graphical contents in an easily viewable way.

If the movable personal computer is held on the instrument panel and used in a conventional manner, the computer needs a large space outside of the instrument panel. This results in that the field of view from a driver's seat is narrowed or the computer interferes a driving operation such as operating a steering wheel. Moreover, when its display are in the sunlight, it gives a poor visibility of a screen on the display.

It is, therefore, an object of the present invention to provide a movable personal computer using system in a motor vehicle which overcomes the foregoing drawbacks and can use a movable personal computer with a good visibility of its screen and without narrowing the field of driver's view or interfering a driving operation.

According to the present invention, there is provided a movable personal computer using system in a motor vehicle comprising: a PC holder which is arranged inside an instrument panel of the motor vehicle to hold a movable personal computer in the instrument panel in a manner that the movable personal computer is attachable to and detachable from the PC holder; a virtual image displaying means that shows a virtual image of a screen on a display of the movable personal computer so that the virtual image can seen from a passenger compartment of the motor vehicle.

Therefore, in this movable personal computer using system, a driver can use the movable personal computer with a good visibility of its screen and without narrowing the field of driver's view or interfering a driving operation.

Preferably, the PC holder has a data connector to exchange a data of information between the movable personal computer and a on-board device of the motor vehicle.

Therefore, the movable personal computer and the on-board device can be connected to each other to exchange a data of information between them and use the data for each side.

Preferably, the data connector of the PC holder is connectable to a data input/output connector of a movable personal computer so that a Controller Area Network of the motor vehicle and the movable personal computer are linked to each other.

Therefore, movable personal computer and the Controller Area Network of the motor vehicle can be linked to each other to exchange a data of information between them and use the data for each side.

Preferably, the PC holder has a height adjuster that adjusts a holding position of the movable personal computer in a vertical direction when the movable personal computer is held by the PC holder.

Therefore, the movable personal computer can be easily adjusted to the appropriate height so that a driver can see a virtual image through the virtual image displaying means in a natural attitude.

Preferably, the virtual image displaying means is arranged inside the instrument panel, and the instrument panel has an opening through which the virtual image of the screen on the display of the movable personal computer can be seen from a passenger compartment of the motor vehicle.

Therefore, a driver can see the virtual image through the opening of the instrument panel.

Preferably, the instrument panel has a cover which is attached to the instrument panel to be rotatable between a closed position and an opened position, and the cover being provided with a mirror supporting means to support the virtual image displaying means, and wherein the PC holder is exposed to a passenger compartment when the cover is located at the opened position.

Therefore, it becomes easier to take the movable personal computer in and out of the PC holder.

Preferably, the virtual image displaying means is composed of a plurality of mirror members.

Therefore, the virtual image is not narrowed even when the movable personal computer is located in the instrument panel.

Preferably, the PC holder has a retainer to retain the movable personal computer and a flat supporting table on which the movable personal computer is supported so as to set the screen side of the display of the movable personal computer upward when the movable personal computer is held by the retainer on the flat supporting table.

Therefore, the movable personal computer can be set and certainly retained on the flat supporting table without a damage to the display of the movable personal computer.

Preferably, the retainer is composed of at least one spring biasing the movable personal computer in three directions from three different sides of the supporting table toward a central portion of the supporting table to retain the movable personal computer at a predetermined position of the supporting table.

Therefore, the spring can be sure to retain the movable personal computer at a predetermined position of the supporting table, whose structure is simple. Moreover, the spring absorbs impact and/or vibration applied to the movable personal computer during vehicle running to protect it from malfunction.

Preferably, the movable personal computer is inputted with data of information from an on-board device of the motor vehicle and displays on the display a screen based on the data from the on-board device.

Therefore, the movable personal computer can display a screen based on the data from the on-board device, such as a vehicle speed, an engine rotational speed, navigation information, and so on.

Preferably, the screen based on the data from the on-board device is concerned about an instrument data of the motor vehicle, and the virtual image displaying means being arranged at an instrument portion of the instrument panel.

Therefore, the movable personal computer can be used as a instrument of the motor vehicle. This means that various types of screens can be displayed on the display, for example, so that a driver can easily becomes aware of what is displayed.

Preferably, the movable personal computer is prevented from manually operating the movable personal computer during vehicle running.

Therefore, this brings safety driving to a driver, for not distracting his or her attention from a driving operation.

Preferably, the instrument panel has an auxiliary display that displays limited information obtained from an on-board device when the display of the movable personal computer fails to display the screen based on the data from the on-board device.

Therefore, the auxiliary display can show the limited information needed for driving when the display of the movable personal computer fails or is not set to the movable personal computer using system, which allows a driver to run the motor vehicle with ease and in safety.

The objects, features and advantages of the present invention will become apparent as the description proceeds when taken in conjunction with the accompanying drawings, in which:
FIG. 1 is a perspective view showing a movable personal computer using system, when its cover is at a closed position, of a first embodiment according to the present invention;
FIG. 2 is a perspective view showing the movable personal computer using system, when its cover is at an opened position, of the first embodiment shown in FIG. 1;
FIG. 3 is a perspective view, from a diagonally upward direction, showing letter L-shaped case beams and two mirror members;
FIG. 4 is a perspective view, from a diagonally downward direction, showing the case beams and the two mirror members shown in FIG. 3;
FIG. 5 is a perspective view, from a diagonally downward direction, showing a case and the two mirror members;
FIG. 6 is a perspective view illustrating a position relation among the mirror members, the case, and a movable personal computer when the movable personal computer is set to its system;
FIG. 7 is a plan view illustrating the state of a movable personal computer and a supporting table of a PC holder before the movable personal compute is moved to the supporting table;
FIG. 8 is a side view illustrating the same state as in FIG. 7 of a movable personal computer and a supporting table of a PC holder before the movable personal compute is moved to the supporting table;
FIG. 9 is a plan view illustrating the state of a movable personal computer and a supporting table of a PC holder when the movable personal compute is moved to the predetermined position of the supporting table;
FIG. 10 is a schematic diagram showing a connection relation of a movable personal computer and a CAN of a motor vehicle through USB connecting ports;
FIG. 11 is a perspective view showing the state where a case with mirror members and a movable personal computer opened by an angle different from FIG.6 are set for its use.

Throughout the following detailed description, similar reference characters and numbers refer to similar elements in all figures of the drawings.

First, a movable personal computer using system in a motor vehicle of a first embodiment according to the present invention will be described with reference to accompanied drawings.

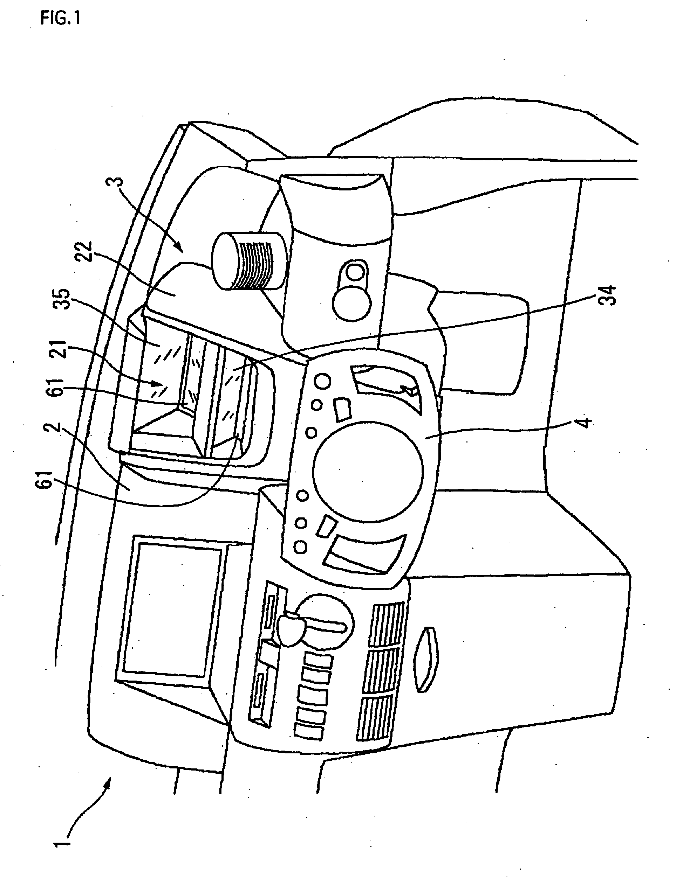

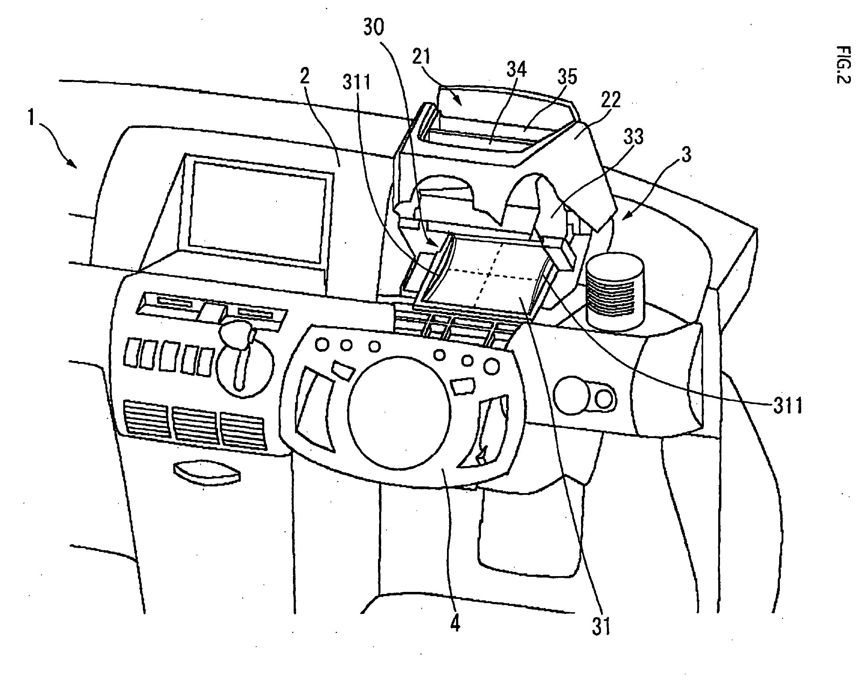

Referring to FIGS. 1 and 2 of drawings, the movable personal computer using system 3 is provided inside an instrument panel 2, also called as a dashboard, and above a steering 4 so that a driver, as a user of the using system 3, can use it at a driver's seat position in a passenger compartment 1.

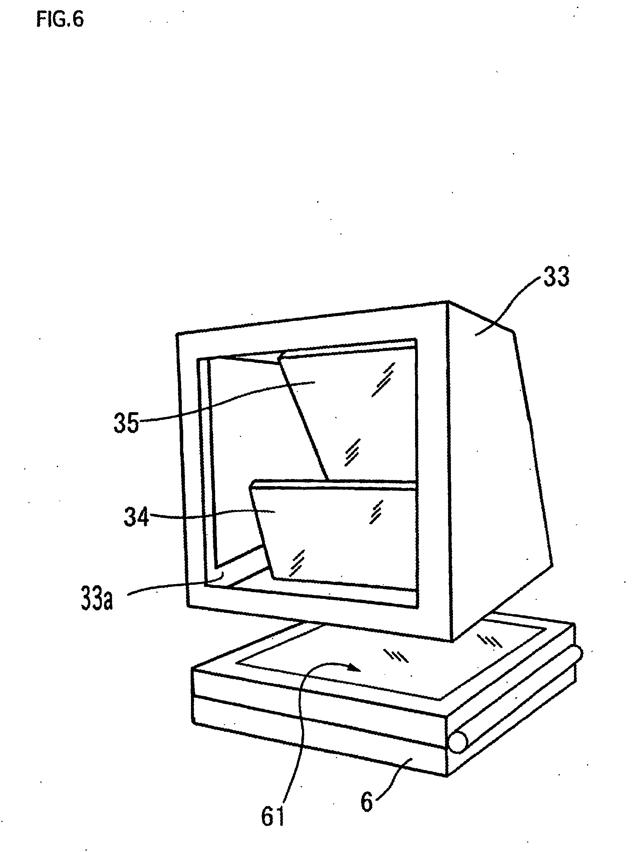

The movable personal computer using system 3 has a case 33, a PC holder 30 to hold a movable personal computer 6, a front and back mirror members 34 and 35 arranged in and attached to the case 33 to show a reflected image of a screen on a display 61, shown in FIG. 6, of the computer 6, and a cover 22 to obscure the computer 6 when held by the PC holder 30. Herein, a notebook sized personal computer is used as the movable personal computer 6.

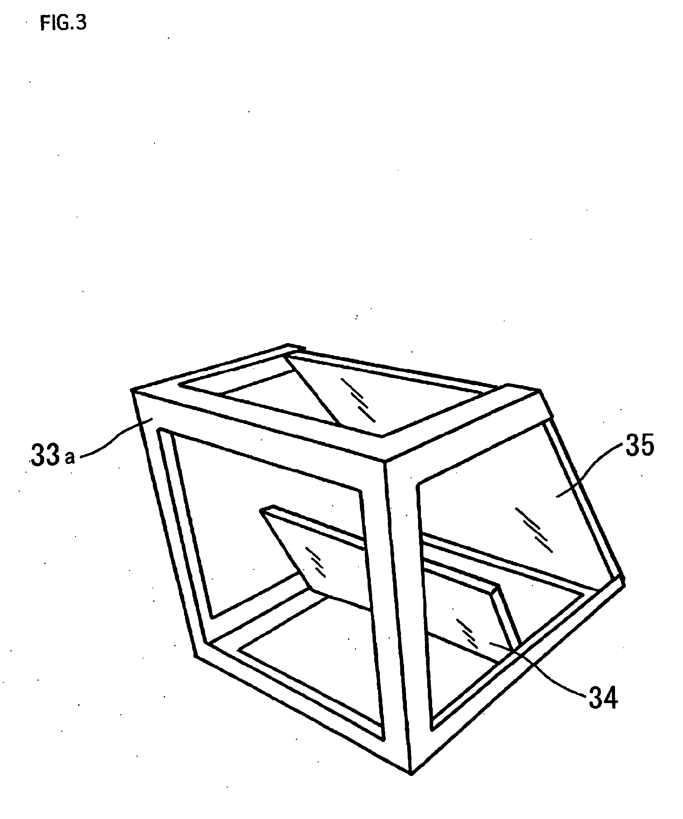

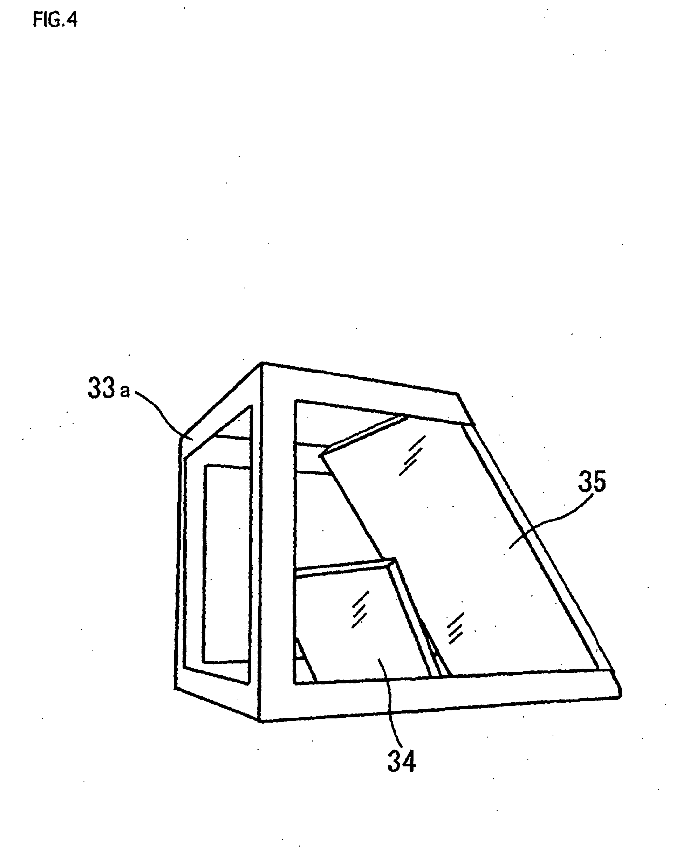

Referring to FIGS. 3 to 6, the case 33 has letter L-shaped case beams 33a shown in FIGS. 3 and 4 inside it and provided with the front mirror member 34 and the back mirror member 35, both attached to the case beams 33a, to form a front window, a bottom window and other windows.

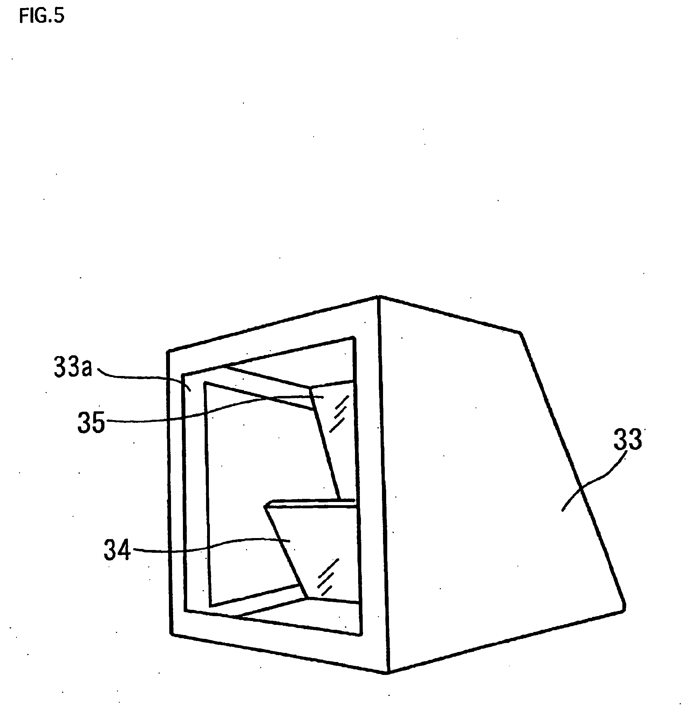

These case beams 33a are covered by the case 33, as shown in FIGS. 5 and 6, with having the front and bottom windows. The case 33 is rotatable about an axis of its back end portion between a closed position and an opened position. The case beams 33a functions as a mirror supporting means of the present invention.

The front mirror member 34 is shorter in height and inclined at the dip of the horizon less than the back mirror member 35. When the case 33 is at a closed position as shown in FG. 6 and the computer 6 is set for its use, the case 33 and the front and back mirror members are positioned over the display 61 of the computer 6. At this closed position, the front mirror member 34 is located over the front portion of the display 61, and the back mirror member 35 over the back portion of the display 61.

Accordingly, the front mirror member 34 reflects the front screen on the display 61 to pass through the front window so that a driver can see its image. Similarly, the back mirror member 35 reflects the back screen on the display 6 to pass through the bottom window so that a driver can see its image. The both mirror members 34 and 35 are adjusted so that their screen images are seen as images on a plane perpendicular to the direction of driver's gaze. The front and back mirror members 34 and 35 functions as a virtual image displaying means of the present invention. The front window of the case 33 functions as an opening of the present invention.

The PC holder 30 is located under the case 33 and has a supporting table with a flat surface. The supporting table is inclined so that the front portion of it becomes lower than the back portion, which reduces a length of its setting space in the longitudinal direction of the motor vehicle, and becomes easier for a driver to see the virtual image of the screen on the display of the movable personal computer.

The supporting table is equipped with a USB connecting port (USB interface) 312 on its side portion and three leaf springs 311 on the flat surface. The USB connecting port 312 functions as a data connector of the present invention.

The three leaf springs are formed in an inward curved figure, and one of them is fixed at the back end portion of the supporting table 31, the rest two leaf springs 311 at each side portion of the supporting table 31 so that they can bias the computer 6 to a predetermined position where it is set on the flat surface of the supporting table 31 for its use. Consequently, the computer 6 is attachable to the supporting table 31 at the predetermined position by three leaf springs 311 and detachable from the supporting table 31. In addition, three leaf springs 311 protects the computer 6 from a damage due to vibration and impact during vehicle running. The leaf springs 311 functions as a retainer of the present invention.

The supporting table 31 is urged upward by coil springs 313 and 314 from the bottom side, and restricted at its maximum height by stoppers, not shown. By this urging by the coil springs, the computer 6 is kept on the supporting table 31.

As described above, the computer 6 is held on the supporting table 31 and biased by three leaf spring from its side portions, which prevent the screen of the display 61 from a damage.

Under the supporting table 31, a pair of cams 32 are also provided to be rotatable with contacting the lower surface of the supporting table 31. The cams 32 rotated by hand or by an electric motor for adjusting the height of the supporting table 31 when the computer 6 is on it. The cams 32 functions as a height adjuster of the present invention.

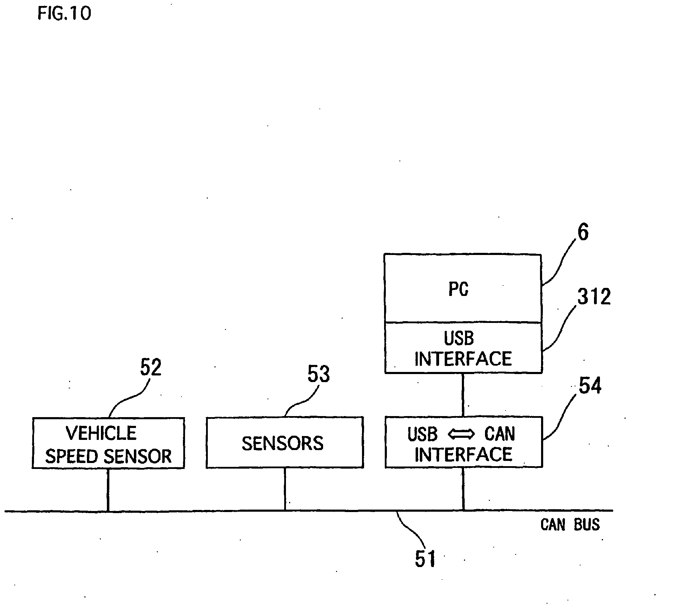

As shown in FIG. 10, the USB connecting port 312 of the supporting table 31 is connected to a Controller Area Network (CAN) BUS line 51 in the motor vehicle through a USB ― CAN interface 54 for exchanging information between the CAN and the computer 6 when they are linked. The CAN BUS line 51 is connected to a vehicle speed sensor, other sensors 53 including a engine rotational speed sensor, not shown, a navigation system, not shown, and the like. In order to connect the CAN BUS line 51 and the computer 6 to each other, the computer 6 has a USB connecting port on the side portion of its body. This USB connecting port of the computer 6 functions as a data input/output connector of the present invention.

Next, an operation of the movable personal computer using system 3 in a motor vehicle will be described.

The movable personal computer 6 is set to the movable personal computer using system 3 as follows.

In order to set the computer 6 to the using system 3, the computer 6 is brought into the passenger compartment 1. Then, the cover 22 is pulled up at its front lower end portion positioned at back and a little upper side of the steering 4. The cover 22 is rotated upward about the axel of the back end portion thereof to open from the closed position shown in FIG. 1 to an opened position shown in FIG. 2, which results in exposure of the inside of the using system 3, especially the PC holder 30. When the cover 22 is opened, the case 33 and the mirror members 34 and 35, which are joined to the cover 22, are rotated with the cover 22 to open for receiving the computer 6.

The screen side of the display 61 and the keyboard side on the body of the computer 6 are rotated relate to each other by approximately 360 degrees, to the position of the computer 6 shown in FIG. 6, from a closed position to a fully opened position so that their sides are located at each outer side with their back sides, top outer side of the display 61 and bottom side of the body, facing each other.

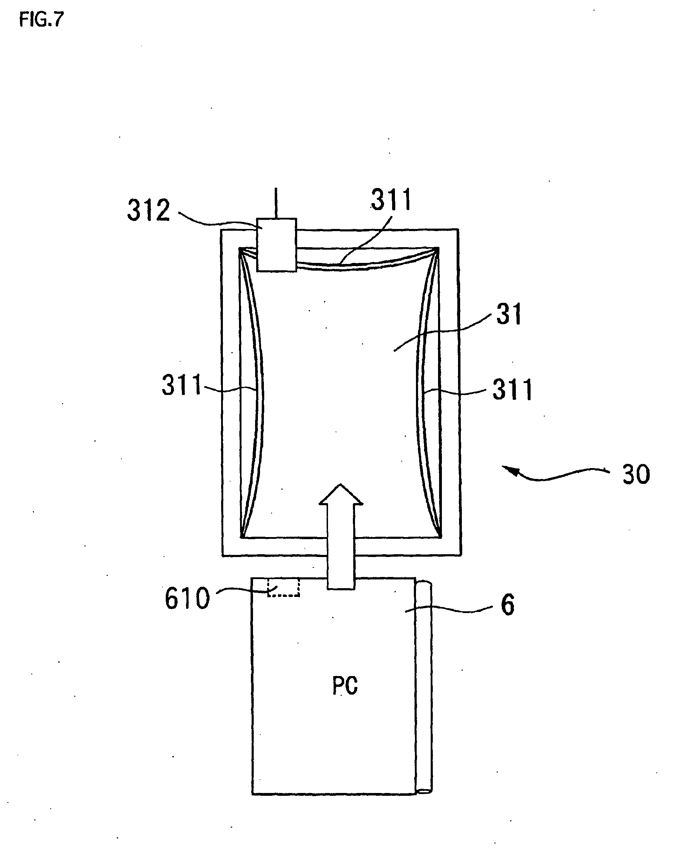

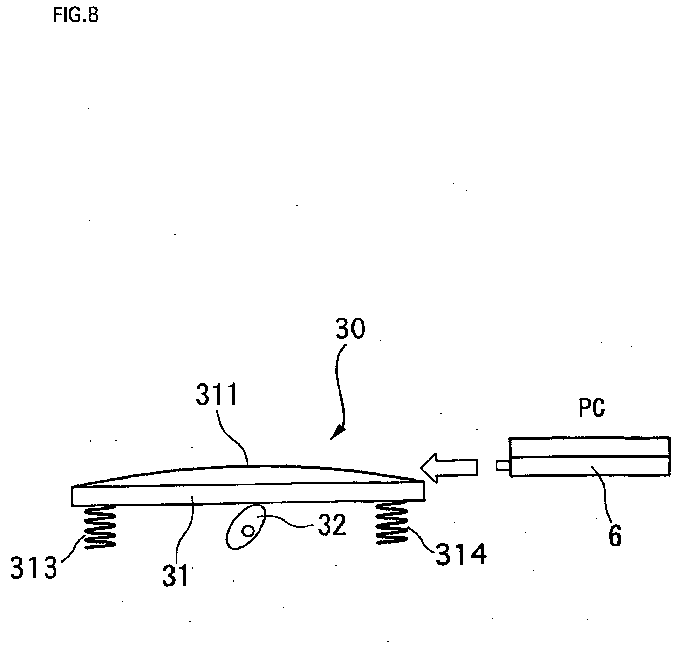

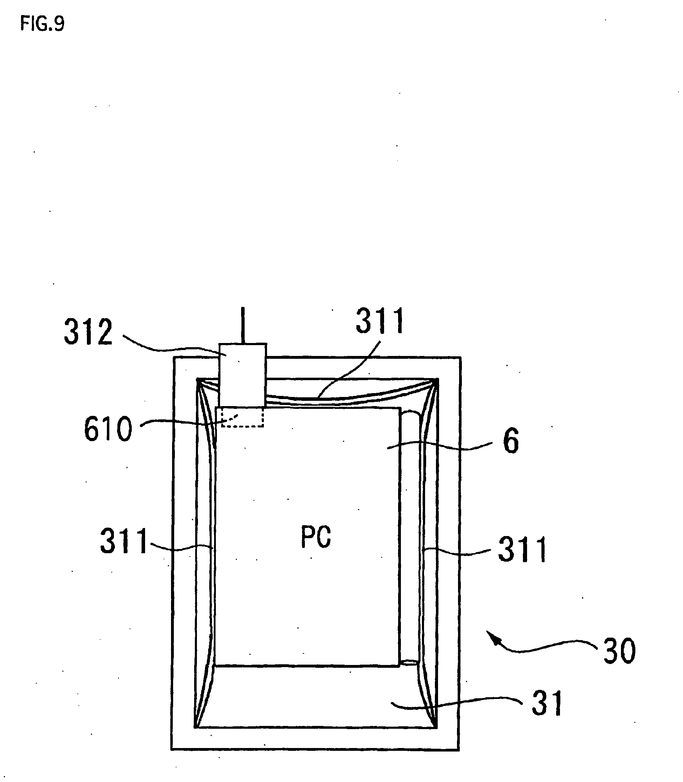

As shown in FIGS.7 and 8, the movable personal computer 6 is brought inside the movable personal computer using system 3 moving from forward to backward of the supporting table 31. The computer 6 is moved on the supporting table 31 from forward to backward to the predetermined position where the USB connecting ports of the computer 6 and the supporting table 31 are connected to each other as shown in FIG. 9. The computer 6 moves deflecting the leaf springs 311, which results in that these leaf springs 311 biases the movable personal computer 6 toward the central portion of the supporting table 31 to be restrained at the predetermined position finally.

Note that a movable personal computer in a size different from the above one 6 can also be set to the PC holder 30 and used as well as the above one 6 in this movable personal computer using system 3. This reason comes from that the leaf springs 311 can be deformed to some extent to absorb their difference in size and urge the computer 6 by their acceptable elastic forces to the predetermined position.

After setting the computer 6 to the predetermined position of the supporting table 31, the cover 22 is rotated downward to the closed position shown in FIG. 1 to obscure the computer 6 and the PC holder 30. When the cover 22 is at this closed position with the computer 6 held at the predetermined position of the supporting table 31, the computer 6 is located under the case, attached to the cover 22. The screen side of the display 61 is kept at the highest position to face the bottom window of the case 33 and cover 22.

After the computer 6 is set to the using system 3 as shown in FIG. 1, the height position of the computer 6 is adjusted so that the driver, in a normal driving attitude, can see the reflected image of the screen on the display 61 through the mirror members 34 and 35.

This height adjustment is made by rotating the cams 32 that contacts the bottom side of the support table 31. These cams 32, whose rotation angles are controlled by hand or by the electric motor to change their top heights, move the supporting table 31 upward or downward according to the controlled rotation angles of the cams 32.

In this state, the computer 6 is powered on, which causes the using system 3 ready for using functions, described later, of the computer 6 and the using system 3 in the motor vehicle through the CAN BUS line. The computer 6 displays a screen rotated by 90 degrees from its commonly displayed screen so that the driver can see the screen image in normal direction through the mirror members 34 and 35.

After utilization of the movable personal computer using system 3, in order to finish it, the movable personal computer 6 is powered off. Then, the cover 22 is opened from the closed position in FIG. 1 to the fully opened position in FIG. 2, which results in that the computer 6 can be pulled out from the supporting table 32. This pulling out disconnects the USB connecting ports of the computer 6 and the supporting table 32 from each other and slips off the computer 6 from the leaf springs 311. The cover 22 is closed from the fully opened position in FIG. 2 to the closed position in FIG. 1. Therefore, taking out the movable personal computer 6 from the movable personal computer using system 3 is done in a simple and easy manner.

As described above, utilization of the movable personal computer 6 with the movable personal computer using system 3 in the motor vehicle has the following advantages.

Information stored in the movable personal computer 6 can be transferred without a movable storage medium such as a CD-ROM, a Floppy Disk, and the like and used in the movable personal computer using system 3. This function reduces duplication of communication such that each device communicates with the same server to obtain the same information from it, which can provide seamless communication between the motor vehicle and the outside of it, for example, home, the office, and so on.

In addition, this movable personal computer using system 3 has thief protection, for the movable personal computer 6 is hard to see from the outside of the motor vehicle whether or not it is set on the supporting table 22. This reason comes from the facts that the computer 6 is set inside the instrument panel 2 and obscured by the cover 22, and that the display 61, whose screen is reflected as a screen image by the mirror members 34 and 35, of the computer 6 is also located backward and inside of the instrument panel 2.

Next, the functions and their advantages of this movable personal computer using system 3 will be disclosed.

When the movable personal computer 6 is set to the movable personal computer using system 3, held on the supporting table 31, and their USB connecting ports are connected to each other, the computer 6 and the CAN line 51 of the motor vehicle are linked to each other as shown in FIG. 10, which enables the exchange of data between them. For example, in this embodiment, the computer 6 receives data from the vehicle speed sensor 52, and other sensors 53 including the engine rotational speed sensor to display their instrument screen on the display 61 of the computer 6.

The display 61 may display not only the above described instrument information such as a vehicle speed, an engine rotational speed and so on, but also information inputted from the other on-board devices, for example, a navigation system control device and the like. Besides, the computer has an ability to display in various manners.

The light from the instrument screen is divided in two and respectively reflected as two instrument screen images by the front mirror member 34 and the back mirror member 35. The two instrument screen images reflected by the mirror members 34 and 35 can be seen by a driver through the opening 21, the front window, of the cover 22. These two instrument screen images are seen as images on the plane perpendicular to the direction of driver's gaze, so that the driver does not need to move around his or her head and eyes. Besides, the mirror members 34 and 35 enables the driver to see the images in the same color as the screen on the display 61 of the computer 6, so that the driver can easily realize what is displayed.

The computer 6 and the motor vehicle are associated with each other so that the computer 6 is capable of displaying the instrument screen about information about the motor vehicle, obtained from the vehicle speed sensor 52 and so on, while its use as a personal computer is restricted during vehicle running. This brings safety driving to the driver, for not distracting his or her attention from a driving operation.

The screen image, which the driver sees, can be easily changed into a various colored image, another desirable image selected by a driver, or the like by changing them of the screen on the display 61. The screen image can show warning or important information about the motor vehicle obtained from CAN. These screen images of warning and information can arrest the driver's attention more certainly.

Moreover, as the computer 6 has various functions much more than mobile phones and the like, the driver can use its functions in the motor vehicle.

As the computer 6 and the on-board devices are linked to each other through USB connecting ports and the CAN, the on-board devices are capable of utilizing information stored in the computer 6 for their own uses.

As the display 61 is located inside of the using system 6 and obscured by the cover 22, it is not exposed to the sun directly. This results in that the display 61 is set under the circumstances of adequate brightness for seeing the screen image, eye-friendly, and that the display 61, especially Liquid Crystal Display, is protected from its malfunction caused by long time exposure to the sunlight.

When the driver uses the computer 6 during parking, he or she can easily use it in a natural attitude. For using the computer 6, as it is linked with on-board devices to exchange a data between them, the user may use the computer 6 by operating an on-board. Another operation for using the computer 6 is obtained by an additional keyboard connected to the computer 6.

If provided with a communicating means connectable with outside computers or servers in the motor vehicle, the computer 6 can mail or link to the Internet through the communicating means. This communicating means may be a cellular phone connected to the computer 6.

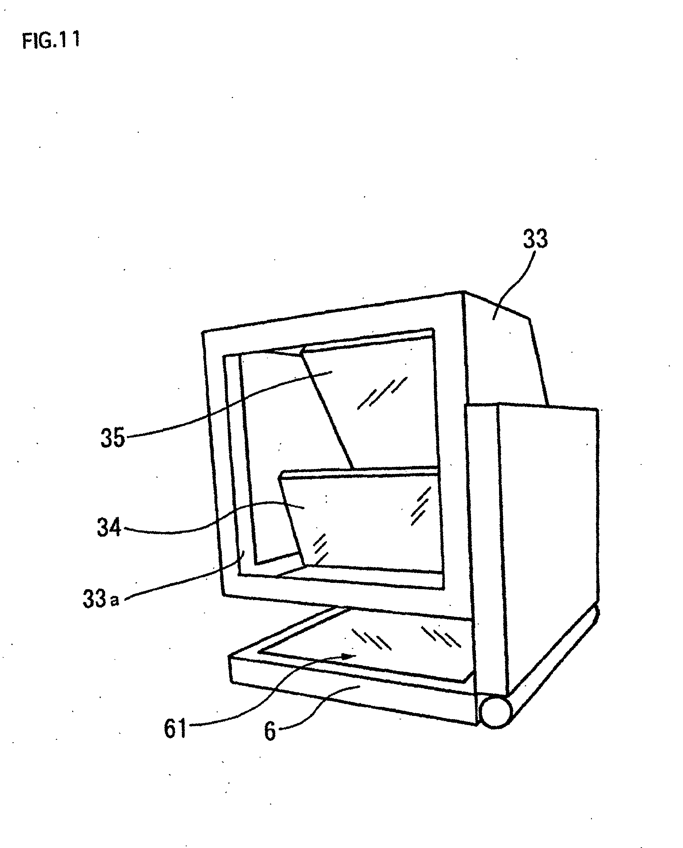

Referring to FIGS. 11 of the drawings, there is shown a movable personal computer using system in a motor vehicle of a second preferred embodiment according to the present invention.

In this second embodiment, the way of setting the movable personal computer 6 to a PC holder is different from the first embodiment, but other parts are similar to the first embodiment.

In order to set the computer 6 to the movable personal computer using system, a cover, not shown, of the using system is opened at first. The computer 6 is opened so that its display 61 and keyboard are rotated with respect to each other by about 90 degrees. Then it is moved to a PC holder, not shown, in a figure such that

The cover and the case are joined with each other and have a space therebetween that receives the keyboard of the computer 6 at their sides.

Therefore, the computer 6 can be set with its display 61 and its keyboard rotated with relative to each other by about 90 degrees.

The embodiments of the present invention have been described above, but the specific structure of the present invention is not limited to this embodiment. The present invention includes any change in design without departing from the gist of the invention.

For example, in the above embodiments, the PC holder 31 has the retainer composed of the three leaf springs 311 biasing the computer 6 from three different directions to hold the computer 6. Instead of these three leaf springs, the retainer may be composed of one leaf spring bent and formed into the same figure as the first embodiment, or springs, a belt, a cap screw, or the like.

In stead of the two mirror members 34 and 35, one or a plurality of mirror members may be used for the virtual image displaying means of the present invention. Besides, the virtual image displaying means may be made of materials different from a glass mirror if it has reflectance similar to the mirror.

In the above embodiments, although the cover 22 is provided in order to set the computer 6 to the PC holder 31, an opening for bringing in and out the computer 6 may be formed on the instrument panel 2, the cover 22 is composed of the instrument panel 2 in this case.

The movable personal computer 6 is not limited to a notebook sized personal computer, data processing device, whatever its name are called, that has functions similar to those of a personal computer may be use in this movable personal computer using system.

A movable personal computer using system in a motor vehicle may have an auxiliary display to display minimum information necessary for driving and on-board devices when a display of the computer is failed or when the computer is not set to the using system.

## Claims

1. A movable personal computer using system (3) in a motor vehicle comprising:
a PC holder (30) which is arranged inside an instrument panel (2) of the motor vehicle to hold a movable personal computer (6) in said instrument panel (2) in a manner that said movable personal computer (6) is attachable to and detachable from said PC holder (30);
a virtual image displaying means (34, 35) that shows a reflected virtual image **characterised in that** the virtual image is that of a screen on a display (61) of said movable personal computer (6) so that the virtual image can be seen from a passenger compartment (1) of the motor vehicle.

2. A movable personal computer using system (3) in a motor vehicle according to claim 1,
wherein said PC holder (30) has a data connector (312) to exchange a data of information between said movable personal computer (6) and a on-board device of the motor vehicle.

3. A movable personal computer using system (3) in a motor vehicle according to claim 1 or claim 2,
wherein said data connector (312) of said PC holder(30) is connectable to a data input/output connector (610) of a movable personal computer (6) so that a Controller Area Network of the motor vehicle and said movable personal computer (6) are linked to each other.

4. A movable personal computer using system (3) in a motor vehicle according to any one of claim 1 to claim 3,
wherein said PC holder (30) has a height adjuster (32) that adjusts a holding position of said movable personal computer (6) in a vertical direction when said movable personal computer (3) is held by said PC holder (30).

5. A movable personal computer using system (3) in a motor vehicle according to any one of claim 1 to claim 4,
wherein said virtual image displaying means (34, 35) is arranged inside said instrument panel (2), and
said instrument panel (2) has an opening through which the virtual image of the screen on the display (61) of said movable personal computer (3) can be seen from a passenger compartment (1) of the motor vehicle.

6. A movable personal computer using system (3) in a motor vehicle according to any one of claim 1 to claim 5,
wherein said instrument panel (2) has a cover (22) which is attached to said instrument panel (2) to be rotatable between a closed position and an opened position,
and said cover (22) being provided with a mirror supporting means (33a) to support said virtual image displaying means (34, 35),
and wherein said PC holder (30) is exposed to a passenger compartment (1) when said cover (22) is located at the opened position.

7. A movable personal computer using system (3) in a motor vehicle according to any one of claim 1 to claim 6,
wherein said virtual image displaying means (34, 35) is composed of a plurality of mirror members (34, 35).

8. A movable personal computer using system (3) in a motor vehicle according to any one of claim 1 to claim 7,
wherein said PC holder (30) has a retainer (311) to retain said movable personal computer (6) and a flat supporting table (31) on which said movable personal computer (6) is supported so as to set the screen side of the display (61) of said movable personal computer (6) upward when said movable personal computer (6) is held by said retainer (311) on said flat supporting table (31).

9. A movable personal computer using system (3) in a motor vehicle according to claim 8,
wherein said retainer (311) is composed of at least one spring (311) biasing said movable personal computer (3) in three directions from three different sides of said supporting table (31) toward a central portion of said supporting table (31) to retain said movable personal computer (6) at a predetermined position of said supporting table (31).

10. A movable personal computer using system (3) in a motor vehicle according to any one of claim 1 to claim 9,
wherein said movable personal computer (6) is inputted with data of information from an on-board device of the motor vehicle and displays on said display (61) a screen based on the data from the on-board device.

11. A movable personal computer using system (3) in a motor vehicle according to claim 10,
wherein the screen based on the data from the on-board device is concerned about an instrument data of the motor vehicle, and said virtual image displaying means (34, 35) being arranged at an instrument portion of said instrument panel (2).

12. A movable personal computer using system (3) in a motor vehicle according to claim 10 or claim 11,
wherein said movable personal computer (6) is prevented from manually operating said movable personal computer (6) during vehicle running.

13. A movable personal computer using system (3) in a motor vehicle according to any one of claim 10 to claim 12,
wherein said instrument panel (2) has an auxiliary display that displays limited information obtained from an on-board device when said display (61) of said movable personal computer (6) fails to display the screen based on the data from the on-board device.

## Patentansprüche

1. System (3) zur Verwendung eines mobilen Personalcomputers in einem Motorfahrzeug, umfassend:
einen PC-Halter (30), der in einem Armaturenbrett (2) des Motorfahrzeuges angeordnet ist, um einen mobilen Personalcomputer (6) in dem Armaturenbrett (2) in einer Weise zu halten, daß der mobile Personalcomputer (6) an dem PC-Halter (30) befestigbar und von diesem lösbar ist,
ein Mittel (34, 35) zum Anzeigen eines virtuellen Bildes, das ein gespiegeltes virtuelles Bild anzeigt, **dadurch gekennzeichnet, daß** das virtuelle Bild das eines Bildes auf einem Display (61) des mobilen Personalcomputer (6) ist, so daß das virtuelle Bild von einer Fahrgastzelle (1) des Motorfahrzeugs aus gesehen werden kann.

2. System (3) zur Verwendung eines mobilen Personalcomputers in einem Motorfahrzeug nach Anspruch 1,
wobei der PC-Halter (3) eine Datenverbindung (312) hat, um Daten von Informationen zwischen dem mobilen Personalcomputer (6) und einer Bordvorrichtung des Motorfahrzeugs auszutauschen.

3. System (3) zur Verwendung eines mobilen Personalcomputers in einem Motorfahrzeug nach Anspruch 1 oder Anspruch 2,
wobei die Datenverbindung (312) des PC-Halters (30) mit einem Dateneingabe-/-ausgabeverbinder (610) eines mobilen Personalcomputers (6) derart verbindbar ist, daß ein Steuerarealnetzwerk des Motorfahrzeugs und des mobilen Personalcomputers (6) miteinander verbunden sind.

4. System (3) zur Verwendung eines mobilen Personalcomputers in einem Motorfahrzeug nach einem der Ansprüche 1 bis 3,
wobei der PC-Halter (30) eine Höheneinstellung (32) aufweist, welche die Halteposition des mobilen Personalcomputers (6) in einer vertikalen Richtung einstellt, wenn der mobile Personalcomputer (6) von dem PC-Halter (30) gehalten wird.

5. System (3) zur Verwendung eines mobilen Personalcomputers in einem Motorfahrzeug nach einem der Ansprüche 1 bis 4,
wobei das Mittel (34, 35) zum Anzeigen eines virtuellen Bildes in dem Armaturenbrett (2) angeordnet ist, und
das Armaturenbrett (2) eine Öffnung hat, durch welche das virtuelle Bild des Bildes auf dem Display (61) des mobilen Personalcomputers (3) von einer Fahrgastzelle (1) des Motorfahrzeugs aus gesehen werden kann.

6. System (3) zur Verwendung eines mobilen Personalcomputers in einem Motorfahrzeug nach einem der Ansprüche 1 bis 5,
wobei das Armaturenbrett (2) eine Abdeckung (22) hat, welche an dem Armaturenbrett (2) befestigt ist, um drehbar zwischen einer geschlossenen und einer geöffneten Position zu sein,
und die Abdeckung (22) mit einem Spiegeltragmittel (33a) versehen ist, um das Mittel (34, 35) zum Anzeigen eines virtuellen Bildes zu tragen,
und wobei der PC-Halter (30) einer Fahrgastzelle (1) ausgesetzt ist, wenn die Abdeckung (22) in der geöffneten Position angeordnet ist.

7. System (3) zur Verwendung eines mobilen Personalcomputers in einem Motorfahrzeug nach einem der Ansprüche 1 bis 6,
wobei das das Mittel (34, 35) zum Anzeigen eines virtuellen Bildes aus einer Vielzahl von Spiegelelementen (34, 35) besteht.

8. System (3) zur Verwendung eines mobilen Personalcomputers in einem Motorfahrzeug nach einem der Ansprüche 1 bis 7,
wobei der PC-Halter (30) einen Halter (311) hat, um den mobilen Personalcomputer (6) und einen flachen Auflagetisch (31), auf welchem der mobile Personalcomputer (6) aufliegt, so zu halten, daß die Bildseite des Displays (61) des mobilen Personalcomputers (6) aufgerichtet wird, wenn der bewegliche Personalcomputer (6) durch den Halter (311) auf dem flachen Auflagetisch (31) gehalten wird.

9. System (3) zur Verwendung eines mobilen Personalcomputers in einem Motorfahrzeug nach Anspruch 8,
wobei der Halter (311) aus wenigstens einer Feder (311) besteht, welche den mobilen Personalcomputer (3) in drei Richtungen von drei unterschiedlichen Seiten des Auflagertisches (31) gegen einen zentralen Abschnitt des Auflagetisches (31) vorspannt, um den mobilen Personalcomputer (6) in einer vorbestimmten Position des Auflagetisches (31) zu halten.

10. System (3) zur Verwendung eines mobilen Personalcomputers in einem Motorfahrzeug nach einem der Ansprüche 1 bis 9,
wobei der mobile Personalcomputer (6) mit Daten von Informationen von einer Bordvorrichtung eines Motorfahrzeuges gespeist wird und auf dem Display (61) ein auf den Daten der Bordvorrichtung basierendes Bild anzeigt.

11. System (3) zur Verwendung eines mobilen Personalcomputers in einem Motorfahrzeug nach Anspruch 10,
wobei das auf den Daten von der Bordvorrichtung basierende Bild mit Instrumentendaten des Motorfahrzeuges zu tun hat und das Mittel (34, 35) zum Anzeigen eines virtuellen Bildes an einem Instrumentenabschnitt des Armaturenbretts (2) angeordnet ist.

12. System (3) zur Verwendung eines mobilen Personalcomputers in einem Motorfahrzeug nach Anspruch 10 oder 11,
wobei der mobile Personalcomputer (6) vor der manuellen Betätigung des Personalcomputers (6) beim Fahren des Fahrzeugs geschützt ist.

13. System (3) zur Verwendung eines mobilen Personalcomputers in einem Motorfahrzeug nach einem der Ansprüche 10 bis 12,
wobei das Armaturenbrett (2) eine Hilfsanzeige hat, welche beschränkte Informationen anzeigt, die von einer Bordvorrichtung erhalten werden, wenn das Display (61) des mobilen Personalcomputers (6) bei der Anzeige des auf den Daten der Bordvorrichtung basierenden Bildes versagt.

## Revendications

1. Système d'utilisation d'ordinateur personnel mobile (3) dans une automobile comprenant :
un support de PC (30) qui est agencé à l'intérieur d'un tableau de bord (2) de l'automobile pour supporter un ordinateur personnel mobile (6) dans ledit tableau de bord (2) de manière à ce que ledit ordinateur personnel mobile (6) puisse être fixé audit support de PC (30) et détaché de celui-ci ;
des moyens d'affichage d'image virtuelle (34, 35) qui présentent une image virtuelle réfléchie, **caractérisé en ce que** l'image virtuelle est celle d'un écran sur un afficheur (61) dudit ordinateur personnel mobile (6) de sorte que l'image virtuelle puisse être vue à partir d'un habitacle (1) de l'automobile.

2. Système d'utilisation d'ordinateur personnel mobile (3) dans une automobile selon la revendication 1,
dans lequel ledit support de PC (30) comporte un connecteur de données (312) pour échanger des données d'information entre ledit ordinateur personnel mobile (6) et un dispositif à bord de l'automobile.

3. Système d'utilisation d'ordinateur personnel mobile (3) dans une automobile selon la revendication 1 ou la revendication 2,
dans lequel ledit connecteur de données (312) dudit support de PC (30) peut être connecté à un connecteur d'entrée/sortie de données (610) d'un ordinateur personnel mobile (6) de sorte qu'un réseau CAN (Controller Area Network) de l'automobile et ledit ordinateur personnel mobile (6) soient reliés l'un à l'autre.

4. Système d'utilisation d'ordinateur personnel mobile (3) dans une automobile selon l'une quelconque des revendications 1 à 3,
dans lequel ledit support de PC (30) comporte un dispositif d'ajustement de hauteur (32) qui ajuste une position de support dudit ordinateur personnel mobile (6) dans une direction verticale lorsque ledit ordinateur personnel mobile (3) est supporté par ledit support de PC (30).

5. Système d'utilisation d'ordinateur personnel mobile (3) dans une automobile selon l'une quelconque des revendications 1 à 4,
dans lequel lesdits moyens d'affichage d'image virtuelle (34, 35) sont agencés à l'intérieur dudit tableau de bord (2), et
ledit tableau de bord (2) comporte une ouverture à travers laquelle l'image virtuelle de l'écran sur l'afficheur (61) dudit ordinateur personnel mobile (3) peut être vue à partir d'un habitacle (1) de l'automobile.

6. Système d'utilisation d'ordinateur personnel mobile (3) dans une automobile selon l'une quelconque des revendications 1 à 5,
dans lequel ledit tableau de bord (2) comporte un capot (22) qui est fixé audit tableau de bord (2) de manière à pouvoir être tourné entre une position fermée et une position ouverte,
et ledit capot (22) est pourvu de moyens de support de miroir (33a) pour supporter lesdits moyens d'affichage d'image virtuelle (34, 35),
et dans lequel ledit support de PC (30) est exposé dans un habitacle (1) lorsque ledit capot (22) est situé dans la position ouverte.

7. Système d'utilisation d'ordinateur personnel mobile (3) dans une automobile selon l'une quelconque des revendications 1 à 6,
dans lequel lesdits moyens d'affichage d'image virtuelle (34, 35) sont composés d'une pluralité d'éléments formant miroir (34, 35).

8. Système d'utilisation d'ordinateur personnel mobile (3) dans une automobile selon l'une quelconque des revendications 1 à 7,
dans lequel ledit support de PC (30) comporte un dispositif de retenue (311) pour retenir ledit ordinateur personnel mobile (6) et une table de support (31) plate sur laquelle ledit ordinateur personnel mobile (6) est supporté de manière à positionner le côté d'écran de l'afficheur (61) dudit ordinateur personnel mobile (6) vers le haut lorsque ledit ordinateur personnel mobile (6) est supporté par ledit dispositif de retenue (311) sur ladite table de support (31) plate.

9. Système d'utilisation d'ordinateur personnel mobile (3) dans une automobile selon la revendication 8,
dans lequel ledit dispositif de retenue (311) est composé d'au moins un ressort (311) appliquant ledit ordinateur personnel mobile (6) dans trois directions à partir de trois côtés différents de ladite table de support (31) vers une partie centrale de ladite table de support (31) pour retenir ledit ordinateur personnel mobile (6) à une position prédéterminée de ladite table de support (31).

10. Système d'utilisation d'ordinateur personnel mobile (3) dans une automobile selon l'une quelconque des revendications 1 à 9,
dans lequel ledit ordinateur personnel mobile (6) reçoit des données d'information entrées à partir d'un dispositif à bord de l'automobile et affiche sur ledit afficheur (61) un écran basé sur les données provenant du dispositif à bord.

11. Système d'utilisation d'ordinateur personnel mobile (3) dans une automobile selon la revendication 10,
dans lequel l'écran basé sur les données provenant du dispositif à bord concerne des données d'instrument de l'automobile, et lesdits moyens d'affichage d'image virtuelle (34, 35) sont agencés au niveau d'une partie d'instruments dudit tableau de bord (2).

12. Système d'utilisation d'ordinateur personnel mobile (3) dans une automobile selon la revendication 10 ou la revendication 11,
dans lequel ledit ordinateur personnel mobile (6) ne peut pas être mis en oeuvre manuellement alors que l'automobile roule.

13. Système d'utilisation d'ordinateur personnel mobile (3) dans une automobile selon l'une quelconque des revendications 10 à 12,
dans lequel ledit tableau de bord (2) comporte un afficheur auxiliaire qui affiche des informations limitées obtenues d'un dispositif à bord lorsque ledit afficheur (61) dudit ordinateur personnel mobile (6) ne peut pas afficher l'écran basé sur les données provenant du dispositif à bord.
